# EUROPÄISCHE PATENTSCHRIFT

(11) **EP 1 104 589 B1**
(45) Veröffentlichungstag und Bekanntmachung des Hinweises auf die Patenterteilung: **13.11.2002**
(21) Anmeldenummer: 99942836.0
(22) Anmeldetag: 10.08.1999
(51) Int. Cl.: H02G 3/04, H02G 11/00, F16G 13/16

(54) **LEITUNGSFÜHRUNGSANORDNUNG**
LINE GUIDANCE DEVICE
DISPOSITIF DE GUIDAGE DE LIGNES

(30) Priorität: 17.08.1998 DE 19837231
(43) Veröffentlichungstag der Anmeldung: 06.06.2001
(73) Patentinhaber: Kabelschlepp Gesellschaft mit beschränkter Haftung, 57074 Siegen (DE)
(72) Erfinder: MÜLLER, Roland, D-57076 Siegen (DE); RICHTER, Wolfgang, D-57223 Kreuztal (DE)
(74) Vertreter: Neumann, Ditmar
(86) Internationale Anmeldenummer: EP9905810
(87) Internationale Veröffentlichungsnummer: WO00011772

(56) Entgegenhaltungen:
- EP-A- 0 544 027
- DE-C- 4 428 680
- US-A- 4 392 344

## Beschreibung

Der Gegenstand der Erfindung bezieht sich auf eine Leitungsführungsanordnung zum Führen wenigstens einer Leitung.

Leitungen, die von einem ortsfesten Anschluß zu einem beweglichen Verbraucher führen, werden in Leitungsführungsanordnungen verlegt. Die Leitungsfiihrungsanordnung ist an einem Ende an einem Festpunkt und mit ihrem anderen Ende mit dem beweglichen Verbraucher verbunden. Es sind Leitungsführungsanordnungen bekannt, die aus gelenkig miteinander verbundenen Kettengliedern aufgebaut sind. Ein Kettenglied weist einen Aufnahmeraum auf. Die Aufnahmeräume der einzelnen Kettenglieder bilden einen Kanal, in dem die Leitungen verlegt sind. Der Aufnahmeraum ist durch zwei voneinander beabstandete, einander gegenüberliegend angeordnete Kettenlaschen sowie durch einen oberen und einen unteren Quersteg begrenzt. Die Querstege sind mit den Kettenlaschen verbunden.

Zum Führen von Leitungen ist durch die DD 265 449 B5 eine Leitungsführungsanordnung bekannt, die einen Leitungsaufnahmekanal aufweist, der durch einen Tragwandbereich, einen Deckenbereich und Seitenwandbereiche begrenzt ist. Der Leitungsaufnahmekanal ist durch Quertrennungen in eine Vielzahl von relativ zueinander verschwenkbaren Segmenten unterteilt. Die Quertrennungen erstrecken sich durch den Deckenbereich hindurch und setzen sich in die Seitenwandbereiche bis in die Nähe des Tragwandbereichs fort.

Eine weitere Ausgestaltung einer Leitungsführungsanordnung ist durch die EP 0 544 027 B1 bekannt. Auch die in der EP 0 544 027 B1 vorgeschlagene Leitungsführungsanordnung dient zum Führen wenigstens einer in einem Leitungsaufnahmekanal verlegten Leitung. Der Leitungsaufnahmekanal weist einen Tragwandbereich, einen Deckenbereich und Seitenwandbereiche auf. Der Leitungsaufnahmekanal ist durch Quertrennungen in eine Vielzahl von relativ zueinander verschwenkbaren Segmenten unterteilt, so daß die Leitungsführungsanordnung unter Bildung eines ersten Trums und eines parallel dazu geführten zweiten Trums sowie eines schleifenartigen Übergangs zwischen den beiden Trums umbiegbar ist. Die Quertrennungen erstrecken sich durch den Deckenbereich hindurch und setzen sich in die Seitenwandbereiche mindestens bis in die Nähe des Tragwandbereichs fort. Bei der Ausgestaltung der Leitungsführungsanordnung nach der EP 0 544 027 B1 ist von dem Deckenbereich und den Seitenwandbereichen des bzw. eines jeden Leitungsaufnahmekanals mindestens einer dieser Bereiche vorkragend ausgebildet und relativ zu einem ihn tragenden Kanalwandbereich zum Kanalinneren hin federnd nachgiebig ausgebildet. Die Quertrennungen verlaufen im wesentlichen senkrecht zur Längsrichtung der Leitungsführungsanordnung.

Eine weitere Ausgestaltung einer Leitungsführungsanordnung ist durch das Gebrauchsmuster G 90 16 870.4 bekannt. Die Leitungsführungsanordnung weist einen Leitungsführungskanal und eine darin geführte, mehrere Leitungen aufweisende Leitungsanordnung, die ein Untertrum und ein darüber geführtes Obertrum aufweist, die an einem Leitungsende der Leitungsführungsanordnung schleifenförmig ineinander übergehen. Ein freies Untertrumende ist mit einer feststehenden Einrichtung und ein freies Obertrumende mit einer in Längsrichtung der Leitungsführungsanordnung hin- und herbeweglichen Einrichtung verbunden. Die Leitungen sind mittels einer gemeinsamen Leitungsbündelungseinrichtung zusammengehalten, an deren Außenseite eine in Leitungslängsrichtung wirksame Gleiteinrichtung guter Gleitfähigkeit angeordnet ist. Die Gleiteinrichtung verhindert eine Reibung zwischen den Leitungsanordnungsbereichen von Obertrum und Untertrum auch bei großer Leitungslänge.

Leitungsführungsanordnungen, wie sie durch die DD 265 449 B5, die EP 0 544 027 B1 bzw. durch die EP 0 490 022 A2 bekannt sind, werden dadurch hergestellt, daß ein Profil aus einem Kunststoff extrudiert und anschließend mittels eines geeigneten Werkzeugs durchtrennt wird, so daß der Strang in einzelne Segmente unterteilt wird.

Problematisch bei Leitungsführungsanordnungen, wie sie beispielsweise durch die EP 0 544 027 B1 bekannt sind, ist, daß die Leitungsführungsanordnung eine relativ geringe Biege- und Torsionssteifigkeit aufweist, so daß die praktische Einsatzfähigkeit der Leitungsführungsanordnung relativ beschränkt ist. Ein weiteres Problem bei den bekannten Leitungsführungsanordnungen ist, daß zur Ausbildung eines definierten Krümmungsradius' im Schleifenbereich zusätzliche Elemente, sogenannte Radiusclips, notwendig sind. Sind diese Elemente mit der Leitungsführungsanordnung verbunden, so kann der Obertrum der Leitungsführungsanordnung nicht mehr auf dem Untertrum der Leitungsführungsanordnung gleiten. Hierdurch bedingt sind die Einsatzzwecke einer solchen Leitungsführungsanordnung auch beschränkt, da die Leitungsführungsanordnung für längere Fahrwege nicht tauglich ist.

Hiervon ausgehend, liegt der vorliegenden Erfindung die Zielsetzung zugrunde, die bekannte Leitungsführungsanordnung so weiterzubilden, daß die Einsatzfähigkeit der Leitungsführungsanordnung erhöht wird. Insbesondere soll die Leitungsführungsanordnung eine höhere Biege- und Torsionssteifigkeit aufweisen. Ein weiteres Ziel der Erfindung ist es eine Leitungsführungsanordnung anzugeben, bei der die Ausbildung eines definierten Krümmungsradius' auch ohne zusätzliche Elemente möglich ist.

Diese Zielsetzung wird durch eine Leitungsführungsanordnung mit den Merkmalen des unabhängigen Anspruchs 1 sowie des unabhängigen Anspruchs 2 erreicht. Vorteilhafte Weiterbildungen und Ausgestaltungen der Leitungsführungsanordnungen sind Gegenstand der jeweiligen abhängigen Ansprüche.

Die erfindungsgemäße Leitungsführungsanordnung zum Führen wenigstens einer Leitung weist einen Leitungsaufnahmekanal auf. Der Leitungsaufnahmekanal hat einen Tragwandbereich, einen Deckenbereich und Seitenwandbereiche. Der Leitungsaufnahmekanal ist durch Quertrennungen in eine Vielzahl von relativ zueinander verschwenkbaren Segmenten unterteilt. Die Quertrennungen erstrecken sich durch den Deckenbereich hindurch. Sie setzen sich in die Seitenwandbereiche mindestens bis in die Nähe des Tragwandbereichs fort. Wenigstens eine Quertrennung zweier benachbarter Segmente ist so ausgebildet, daß das eine Segment wenigstens eine Ausnehmung und das andere Segment einen in die Ausnehmung eingreifenden Vorsprung aufweist.

Gemäß einem weiteren erfinderischen Gedanken wird eine Leitungsführungsanordnung zum Führen wenigstens einer Leitung mit zwei im wesentlichen parallel miteinander verbundenen Strängen vorgeschlagen. Die Stränge können durch Querstege miteinander verbunden sein. Jeder Strang weist einen Tragwandbereich, einen Deckenbereich und wenigstens einen Seitenwandbereich auf. Jeder Strang ist durch Quertrennungen in eine Vielzahl von relativ zueinander verschwenkbaren Segmenten unterteilt. Die Quertrennungen erstrecken sich durch-den Deckenbereich hindurch. Sie setzen sich in den wenigstens einen Seitenwandbereich mindestens bis in die Nähe des Tragwandbereichs fort. Wenigstens eine Quertrennung zweier benachbarter Segmente ist so ausgebildet, daß das eine Segment wenigstens eine Ausnehmung und das andere Segment einen in die Ausnehmung eingreifenden Vorsprung aufweist.

Den erfindungsgemäß ausgebildeten Leitungsführungsanordnungen liegt die Überlegung zugrunde, daß durch eine geeignete Ausgestaltung der Quertrennungen die benachbarten Segmente sich gegenseitig in Längs- und/oder in Querrichtung abstützen. Hierdurch wird eine höhere Biege- und Torsionsfestigkeit bzw. Quersteifigkeit der Leitungsführungsanordnungen erreicht. Ragt der Vorsprung des einen Segmentes in die Ausnehmung des benachbarten Segmentes, so ist eine Verbindung zwischen den benachbarten Segmenten gegeben, durch die sich die benachbarten Segmente nicht quer zueinander verschieben können. Die Ausnehmung und der Vorsprung sind vorzugsweise so ausgebildet, daß auch wenn die benachbarten Segmente im Schleifenbereich der Leitungsführungsanordnung relativ zueinander ausgelenkt werden, diese in Eingriff bleiben. Dies hat den Vorzug, daß auch im Schleifenbereich der Leitungsführungsanordnung eine erhöhte Biegeund Torsionsfestigkeit der Leitungsführungsanordnung erreicht wird.

Die Quertrennungen können durch eine entsprechende Führung eines Schneidwerkzeugs gebildet werden. Die Quertrennungen können auch mittels eines Wasserstrahlschneidgerätes in die Leitungsführungsanordnung eingebracht werden. Es ist auch möglich, Quertrennungen mittels geeignet geformter Stanzmesser in die Leitungsführungsanordnung einzubringen.

Die Quertrennungen weisen vorzugsweise wenigstens einen Abschnitt auf, der eine Längsachse der Leitungsführungsanordnung unter einem Winkel schneidet, der kein rechter Winkel ist. Die Quertrennungen können beispielsweise bogenförmig, insbesondere teilkreisbogenförmig, ausgebildet sein. Die bogenförmigen Quertrennungen bilden in dem einen Segment eine Ausnehmung, die eine gekrümmte Stirnfläche hat. Das andere Segment weist einen Vorsprung auf, der eine entsprechend gekrümmt ausgebildete Stirnfläche hat. Die Quertrennungen können auch zickzack- und oder mäanderförmig ausgebildet sein.

Gemäß einer vorteilhaften Weiterbildung der erfindungsgemäßen Leitungsführungsanordnungen wird vorgeschlagen, daß die Ausnehmung und der Vorsprung in Seitenwandbereichen ausgebildet sind. Insbesondere wird vorgeschlagen, daß die Ausnehmung und der Vorsprung wenigstens einen sich in Längsrichtung der Leitungsführungsanordnung erstreckenden, bogenförmigen Abschnitt aufweisen. Durch diese Ausgestaltung der Ausnehmung und des Vorsprungs wird zusätzlich eine Führung der benachbarten Segmente während eines Verschwenkvorgangs erreicht. Ein solcher Verschwenkvorgang tritt während der Bewegung der Leitungsführungsanordnung auf, wenn ein Leitungsabschnitt in den schleifenförmigen Bereich der Leitungsführungsanordnung übergeht.

Nach einer weiteren vorteilhaften Ausgestaltung der erfindungsgemäßen Leitungsführungsanordnung wird vorgeschlagen, daß die Ausnehmung und der Vorsprung in Deckwandbereichen ausgebildet sind. Die Ausbildung der Vorsprünge und der Ausnehmungen in den Deckwandbereichen haben eine erhöhte Biege- und Torsionfestigkeit der Leitungsführungsanordnung zur Folge.

Nach einer noch weiteren vorteilhaften Ausgestaltung der Leitungsführungsanordnung wird vorgeschlagen, daß der Tragwandbereich zwischen dem Deckenbereich und einem Bodenbereich ausgebildet ist. Es sind zusätzliche Quertrennungen vorgesehen, die sich durch den Bodenbereich erstrecken und sich in den wenigstens einen Seitenwandbereich mindestens bis in die Nähe des Tragwandbereiches fortsetzen. Wenigstens eine zusätzliche Quertrennung zweier benachbarter Segmente ist so ausgebildet, daß das eine Segment wenigstens eine Ausnehmung und das andere Segment einen in die Ausnehmung eingreifenden Vorsprung aufweist. Die Ausnehmung durch diese zusätzliche Maßnahme bei einer Leitungsführungsanordnung kann eine noch höhere Biege- und Torsionssteifigkeit der Leitungsführungsanordnung erreicht werden. Ein weiterer Vorzug der Ausbildung kann darin gesehen werden, daß bei V-förmig ausgebildeten Quertrennungen in den Seitenwandbereichen unterhalb des Tragwandbereichs Krümmungsradiusbegrenzer ausgebildet werden, so daß auf zusätzliche Elemente verzichtet werden kann. Dadurch, daß die Krümmungsradiusbegrenzer einen integralen Bestandteil des Leitungsaufnahmekanals bzw. eines jeden Strangs bilden, kann ein Obertrum der Leitungsführungsanordnung auf einem Untertrum der Leitungsführungsanordnung geführt werden. Die Leitungsführungsanordnung kann daher auch längere Verfahrwege überwinden.

Nach einer noch weiteren vorteilhaften Ausgestaltung wird vorgeschlagen, daß die Ausnehmung und der Vorsprung im wesentlichen komplementär zueinander ausgebildet sind. Dies vereinfacht die Herstellung der Leitungsführungsanordnung.

Die Begrenzung des Verschwenkwinkels und somit auch des Krümmungsradius' der Leitungsführungsanordnung im Bereich der Schleifenbildung kann auch dadurch erfolgen, daß die Ausnehmung und der Vorsprung jeweils wenigstens eine Anschlagfläche aufweisen, durch die ein Verschwenkwinkel der benachbarten Segmente begrenzt wird.

Nach einer noch weiteren vorteilhaften Ausgestaltung der Leitungsführungsanordnung wird vorgeschlagen, daß der Vorsprung eine Lasche mit einem den Laschenquerschnitt seitlich überragenden Kopf aufweist. Die Ausnehmung weist einen Abschnitt, in dem die Lasche beweglich ist und eine Kopfaufnahme, in der der Kopf beweglich ist, auf. Die Längserstreckung der Kopfaufnahme ist größer als die Längserstreckung des Kopfes. Dies kann durch entsprechende Ausstanzungen oder Ausschnitte erreicht werden. Durch diese Ausgestaltung der Leitungsführungsanordnung wird mit einfachen Mitteln eine Begrenzung des Verschwenkwinkels benachbarter Segmente erreicht. Insbesondere ist die Längserstreckung der Ausnehmung größer als die Längserstreckung des Vorsprungs. Vorzugsweise ist die Ausnehmung und der Vorsprung im wesentlichen T-förmig ausgebildet.

Weitere Einzelheiten und Vorteile der erfindungsgemäßen Ausbildungen der Leitungsführungsanordnungen werden anhand der in der Zeichnung dargestellten Ausführungsbeispiele erläutert. Es zeigen:
- Fig. 1: perspektivisch ein erstes Ausführungsbeispiel einer Leitungsführungsanordnung,
- Fig. 2: in einer perspektivischen Darstellung ein zweites Ausführungsbeispiel einer Leitungsführungsanordnung,
- Fig. 3: schematisch einen Ausschnitt benachbarter Segmente im verschwenkten Zustand,
- Fig. 4: ein drittes Ausführungsbeispiel einer Leitungsführungsanordnung in einer perspektivischen Darstellung mit Ausnehmungen und Vorsprüngen in Seitenwandbereichen,
- Fig. 5: einen Leitungsaufnahmekanal bzw. einen Strang für eine Leitungsführungsanordnung mit Verschwenkwinkelbegrenzung,
- Fig. 6: vergrößert benachbarte Segmente des Leitungsführungskanals bzw. Strangs im verschwenkten Zustand,
- Fig. 7: schematisch ein weiteres Ausführungsbeispiel einer Leitungsführungsanordnung bzw. eines Strangs mit Verschwenkwinkelbegrenzern,
- Fig. 8: zwei benachbarte Segmente der Leitungsführungsanordnung nach Fig. 7 im verschwenkten Zustand,
- Fig. 9: schematisch und in einer perspektivischen Darstellung eine Leitungsführungsanordnung bzw. einen Strang mit Krümmungsradiusbegrenzern,
- Fig. 10: eine Schnittansicht entlang der Schnittlinie A-A nach Fig. 9,
- Fig. 11: schematisch eine Leitungsführungsanordnung mit einem Strang,
- Fig. 12: schematisch und perspektivisch einen Strang mit gekrümmt ausgebildeten Quertrennungen,
- Fig. 13: den Strang nach Fig. 12 in einer Draufsicht,
- Fig. 14: ein weiteres Ausführungsbeispiel einer Leitungsführungsanordnung mit zickzackförmigen Quertrennungen in einer perspektivischen Darstellung und
- Fig. 15: die Leitungsführungsanordnung in einer Draufsicht.

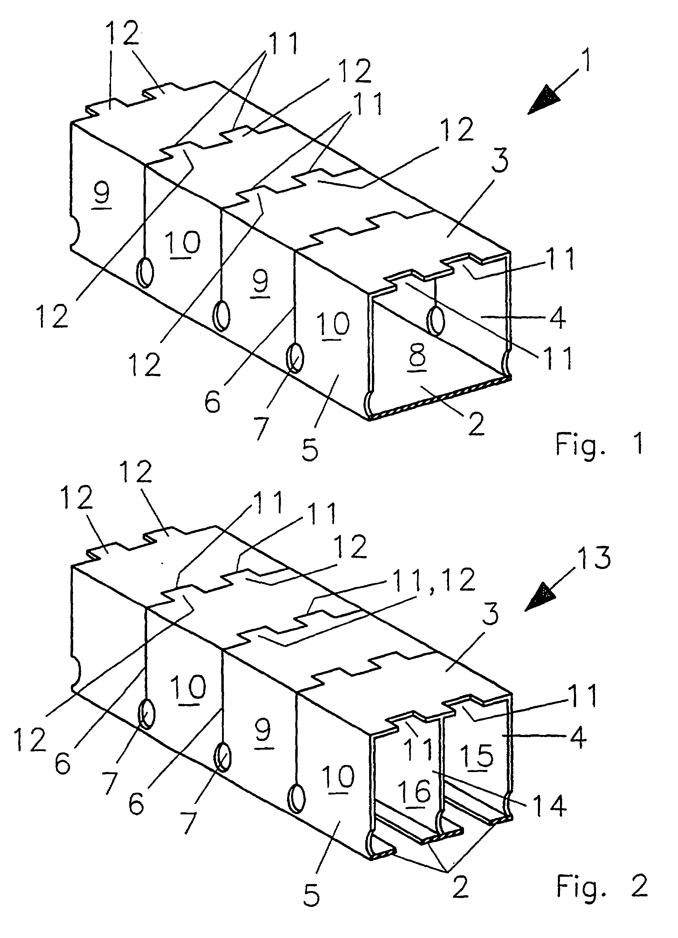

Fig. 1 zeigt eine Leitungsführungsanordnung zum Führen wenigstens einer Leitung. Die wenigstens eine Leitung wird in einem Kanal 8 des Leitungsaufnahmekanals 1 geführt. Die wenigstens eine Leitung ist in der Fig. 1 nicht dargestellt. Der Leitungsaufnahmekanal 1 weist einen Tragwandbereich 2, einen Deckenbereich 3 und Seitenwandbereiche 4, 5 auf. Der Querschnitt des Leitungsaufnahmekanals 1 ist im wesentlichen rechteckförmig. Andere Querschnitte sind möglich.

Der Leitungsaufnahmekanal 1 ist durch Quertrennungen 6 in eine Vielzahl von relativ zueinander verschwenkbaren Segmenten 9, 10 unterteilt. Die Quertrennungen 6 erstrecken sich durch den Deckenbereich 3 hindurch. Sie setzen sich in die Seitenwandbereiche 4, 5 mindestens bis in die Nähe des Tragwandbereichs 2 fort. In dem dargestellten Ausführungsbeispiel münden die Quertrennungen 6 in Öffnungen 7, die einen im wesentlichen kreisförmigen Querschnitt aufweisen. Durch die kreisförmigen Öffnungen 7 soll eine Verminderung der Materialbeanspruchung des Leitungsaufnahmekanals 1 im verschwenkten Zustand benachbarter Segmente 9, 10 erreicht werden.

Die Quertrennungen 6 zweier benachbarter Segmente 9, 10 sind so ausgebildet, daß das eine Segment 9 wenigstens eine Ausnehmung 11 und das andere Segment 10 wenigstens einen in die Ausnehmung 11 eingreifenden Vorsprung 12 aufweist. In dem dargestellten Ausführungsbeispiel weisen die Segmente 9, 10 sowohl Ausnehmungen 11 als auch Vorsprünge 12 auf. Betrachtet man beispielsweise das Segment 9, so weist es zum rechts vom Segment 9 benachbarten Segment 10 Ausnehmungen 11 auf, in die Vorsprünge 12 des rechts vom Segment 9 benachbarten Segmentes 10 hineinragen. Das Segment 9 weist in dem, den Ausnehmungen 11 gegenüberliegenden Randbereich Vorsprünge 12 auf, die in entsprechend ausgebildete Ausnehmungen 11 des links vom Segment 9 angeordneten Segmentes 10 eingreifen. Diese Ausgestaltung der Leitungsführungsanordnung hat den Vorteil, daß die Führung eines Schneidwerkzeugs, bei dem es sich beispielsweise um einen Laser handeln kann, stets gleich ist. Sofern es zweckmäßig ist, können die Quertrennungen auch so gewählt werden, daß das eine Segment lediglich Ausnehmungen oder nur Vorsprünge aufweist und das benachbarte Segment nur Vorsprünge bzw. Ausnehmungen hat. Welche Segmente Ausnehmungen und/oder Vorsprünge aufweisen, ist von der Führung der Quertrennungen abhängig.

Dadurch, daß die Quertrennungen so geführt sind, daß die benachbarten Segmente 9, 10 ineinandergreifende Vorsprünge 12 und Ausnehmungen 11 aufweisen, wird eine erhöhte Torsionssteifigkeit des Leitungsaufnahmekanals 1 und somit auch der Leitungsführungsanordnung erreicht, da die benachbarten Segmente nicht relativ zueinander quer zur Längsrichtung der Leitungsführungsanordnung verschieblich sind.

Fig. 1 zeigt, daß im gestreckten Zustand der Leitungsführungsanordnung die Vorsprünge 12 in die Ausnehmungen 11 eingreifen.

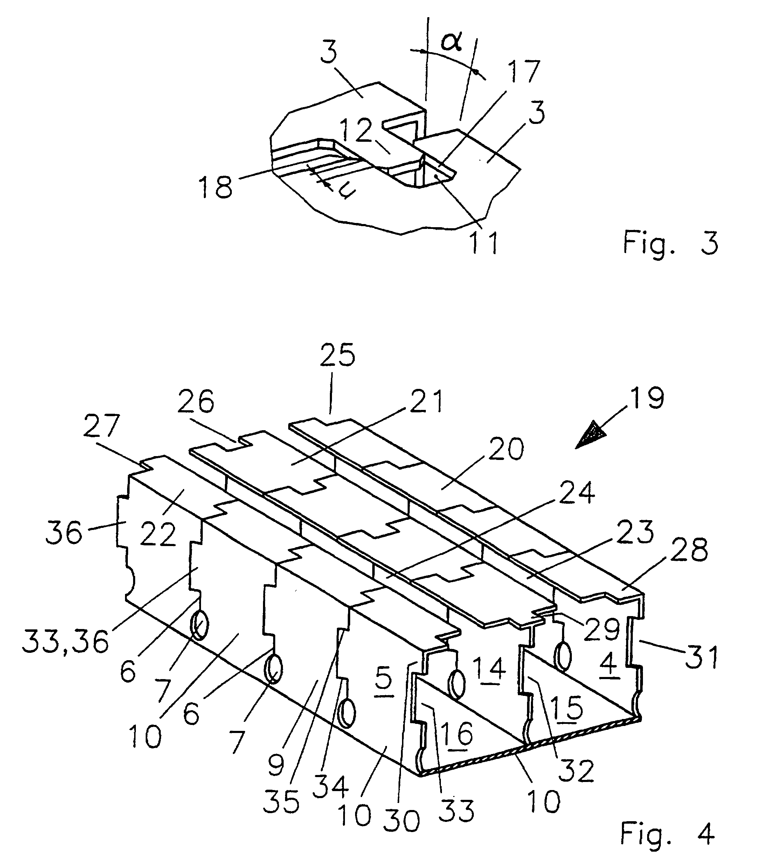

Wird die Leitungsführungsanordnung in einen schleifenförmigen Bereich übergeführt, so werden die Segmente 9, 10 relativ zueinander um eine im Tragwandbereich liegende Achse, die quer zur Längsrichtung der Leitungsführungsanordnung verläuft, verschwenkt. Fig. 3 zeigt ausschnittsweise zwei benachbarte Segmente 9, 10 im verschwenkten Zustand. Mit α ist der Verschwenkwinkel der benachbarten Segmente bezeichnet. Während des Verschwenkvorgangs wird der Vorsprung 12 aus der Ausnehmung 11 herausgeführt. Der Vorsprung 12 ist in dem dargestellten Ausführungsbeispiel in einer Form einer rechteckförmigen Lasche ausgebildet. Die Ausnehmung 11 ist komplementär zum Vorsprung 12 ausgebildet. Die parallel zueinander verlaufenden Flächen 17, 18 der Ausnehmung bzw. des Vorsprungs gleiten aneinander vorbei. Mit U ist ein Überstand des Vorsprungs 12 bezeichnet, der in die Ausnehmung 11 hineinragt, wenn die benachbarten Segmente den maximal zulässigen Verschwenkwinkel α erreicht haben. Diese Ausgestaltung der Ausnehmung 11 und des Vorsprungs 12 hat den Vorteil, daß auch im verschwenkten Zustand der Segmente der Leitungsaufnahmekanal eine höhere Torsionssteifigkeit aufweist. Die Länge des Vorsprungs bzw. der Ausnehmung in Längsrichtung der Leitungsführungsanordnung wird daher vorzugsweise so gewählt, daß der Vorsprung 12 auch im verschwenkten Zustand der benachbarten Segmente teilweise in die Ausnehmung 11 hineinragt. Dieser Vorteil wird nicht nur bei der Ausgestaltung der Ausnehmung 11 und des Vorsprungs 12 im Deckenbereich sondern auch in den Seitenwandbereichen erreicht.

Fig. 2 zeigt ein weiteres Ausführungsbeispiel eines Leitungsaufnahmekanals 13 auf. Der prinzipielle Aufbau des Leitungsaufnahmekanals 13 entspricht dem Aufbau des Leitungsaufnahmekanals 1. Gleiche Teile des Leitungsaufnahmekanals 13 und des Leitungsaufnahmekanals 1 sind mit den gleichen Bezugszeichen versehen.

Der Leitungsaufnahmekanal 13 weist einen Kanal 15 und einen Kanal 16 auf. Die Kanäle 15, 16 sind durch eine Trennwand 14 voneinander getrennt. Die Trennwand 14 verläuft im wesentlichen parallel zu den Seitenwänden 4, 5. Die Quertrennungen 6 erstrecken sich auch durch die Trennwand 14.

Fig. 4 zeigt schematisch ein weiteres Ausführungsbeispiel eines Leitungsaufnahmekanals 19. Der Leitungsaufnahmekanal 19 weist Seitenwandbereiche 4, 5 auf. Zwischen den Seitenwandbereichen 4, 5 ist eine Trennwand 14 vorgesehen, die sich im wesentlichen in Längsrichtung des Leitungsaufnahmekanals 19 und parallel zu den Seitenwänden 4, 5 erstreckt. Der Leitungsaufnahmekanal 19 weist Deckenbereiche 20, 21 und 22 auf. Zwischen den benachbarten Deckenbereichen 20, 21; 21, 22 sind Spalte 23, 24 vorgesehen, durch die eine Leitung in den Kanal 15 bzw. 16 einbringbar ist.

Der Leitungsaufnahmekanal 19 ist durch Quertrennungen 6 in eine Vielzahl von relativ zueinander verschwenkbaren Segmenten 9, 10 unterteilt. Die Quertrennungen 6 erstrecken sich durch die Deckenbereiche 20, 21, 22 hindurch. Sie setzen sich in die Seitenwandbereiche 4, 5 und die Trennwand 14 mindestens bis in die Nähe des Tragwandbereichs 2 fort.

Die Quertrennungen 6, sind so ausgebildet, daß die benachbarten Segmente 9, 10 Ausnehmungen und Vorsprünge aufweisen, die ineinandergreifen. In dem Deckenbereich 20 eines Segmentes 9 ist eine Ausnehmung 25 und ein Vorsprung 28 ausgebildet. In dem Deckenbereich 21 eines Segmentes 10 ist eine Ausnehmung 26 und ein Vorsprung 29 ausgebildet. In dem Deckenbereich 22 ist eine Ausnehmung 27 und ein Vorsprung 30 ausgebildet. Die Ausnehmungen 25, 26, 27 und die Vorsprünge 28, 29, 30 sind so ausgebildet, daß diese in gestreckter Lage des Leitungsaufnahmekanals 19 ineinandergreifen. Die prinzipielle Funktionsweise der Vorsprünge 28, 29, 30 und der Ausnehmungen 25, 26, 27 entspricht im wesentlichen der Funktionsweise einer Leitungsführungsanordnung, wie sie zur Fig. 3 beschrieben wurde.

Zusätzlich zu den Ausnehmungen und Vorsprüngen im Deckenbereich weist der Leitungsaufnahmekanal 19 Ausnehmungen 31, 32, 33 in Seitenwandbereichen 4, 5 und in der Trennwand 14 auf. Entsprechend ausgebildete Vorsprünge 36 weisen die Seitenwandbereiche 4, 5 und die Trennwand 14 auf Die Ausnehmungen 31, 32, 33 weisen zwei im wesentlichen parallel zueinander verlaufende Abschnitte 34, 35 auf, die bogenförmig ausgebildet sind. Korrespondierende Abschnitte weisen die Vorsprünge 36 auf.

Während eines Verschwenkvorgangs des Leitungsaufnahmekanals werden die benachbarten Segmente durch die ineinandergreifenden Vorsprünge und Ausnehmungen 31, 32, 33 bzw. 36 geführt. Die Ausnehmungen 31, 32, 33 und die Vorsprünge 36 tragen auch zur Torsionsfestigkeit des Leitungsaufnahmekanals 19 bei.

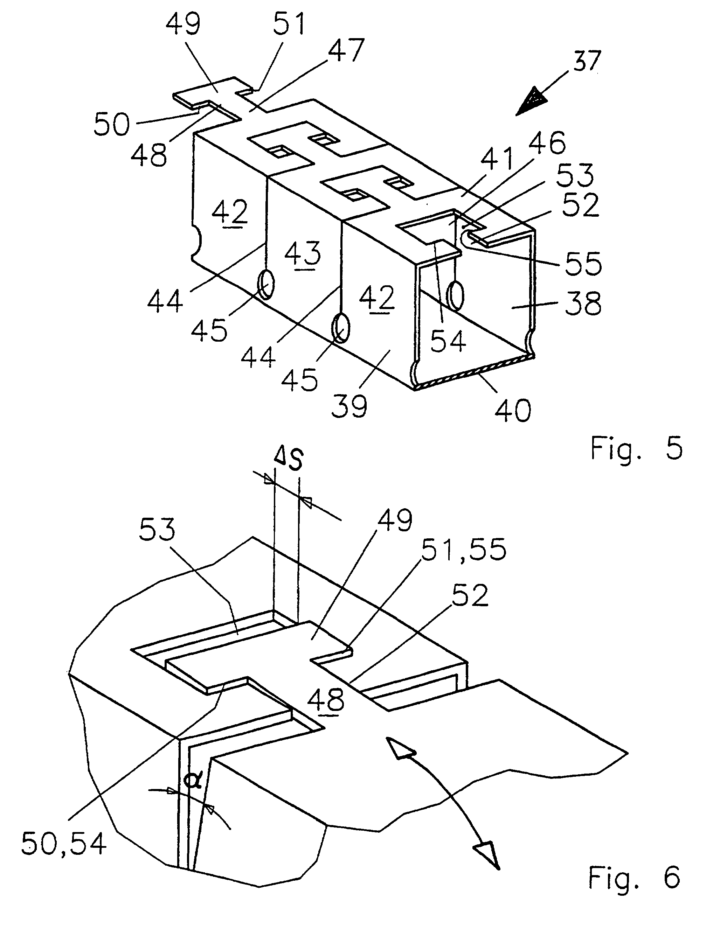

Fig. 5 zeigt die Ausbildung eines Strangs 37 für eine Leitungsführungsanordnung zum Führen wenigstens einer Leitung. Der Strang 37 weist einen Tragwandbereich 40, einen Deckenbereich 41 und Seitenwandbereiche 38, 39 auf. Der Strang 37 ist als ein Hohlprofil ausgebildet.

Der Strang 37 ist durch Quertrennungen in eine Vielzahl von relativ zueinander verschwenkbaren Segmenten 42, 43 unterteilt. Die Quertrennungen erstrecken sich durch den Deckenbereich 41 hindurch. Sie setzen sich in den Seitenbereichen 38, 39 mindestens bis in die Nähe des Tragwandbereichs 40 fort. Die Quertrennungen 44 münden in Öffnungen 45, durch die eine Verminderung der Beanspruchung des Strangs im Bereich der Biegeachsen erreicht wird.

Die Quertrennung zweier benachbarter Segmente ist so ausgebildet, daß das eine Segment eine Ausnehmung 46 und das andere Segment einen in die Ausnehmung 46 hineinragenden Vorsprung 47 aufweist.

Der Vorsprung 47 weist eine sich in Längsrichtung des Strangs 37 erstrekende Lasche 48 auf. Am freien Ende der Lasche 48 ist ein den Laschenquerschnitt seitlich überragender Kopf 49 vorgesehen.

Die Ausnehmung 46 weist einen Abschnitt 52 auf, in dem die Lasche 48 beweglich ist. Die Ausnehmung 46 weist eine Kopfaufnahme 53 auf, in der der Kopf 49 des Vorsprungs 47 beweglich ist. Wie insbesondere aus der Fig. 5 ersichtlich ist, ist die Längserstreckung der Kopfaufnahme 53 größer als die Längserstreckung des Kopfes 49, so daß der Vorsprung 47 und die Ausnehmung 46 ein Verschwenken der benachbarten Segmente zuläßt.

Fig. 6 zeigt zwei benachbarte Segmente des Strangs 37 im verschwenkten Zustand. Mit ΔS ist die Strecke bezeichnet, um die der Kopf 49 innerhalb der Kopfaufnahme 53 im wesentlichen in Längsrichtung des Strangs 37 verschoben wurde. Der Verschwenkwinkel α ist proportional zu der Strecke ΔS. Durch entsprechende Anpassung der Strecke ΔS kann ein Verschwenkwinkel α eingestellt werden.

Der Kopf 49 weist Anschlagflächen 50, 51 auf, die zur Anlage an die Anschlagflächen 54, 55 der Kopfaufnahme 53 gelangen. Durch die Anschlagflächen 51, 55; 50, 54 wird auch der Verschwenkwinkel α begrenzt.

Eine Leitungsführungsanordnung kann durch die Verwendung zweier Stränge 37 aufgebaut werden. Die Stränge 37 werden durch geeignete Verbindungsmittel im Abstand zueinander verbunden. In dem Zwischenraum zwischen den parallel zueinander verlaufenden Strängen können Leitungen angeordnet werden.

In dem dargestellten Ausführungsbeispiel nach Fig. 5 ist der Strang 37 als ein Hohlprofil ausgebildet. Der prinzipielle Aufbau des Strangs 37 kann auch dazu verwendet werden, daß dieser als ein Leitungsaufnahmekanal dient. In einem solchen Fall kann eine Leitung unmittelbar in den Leitungsaufnahmekanal eingebracht werden.

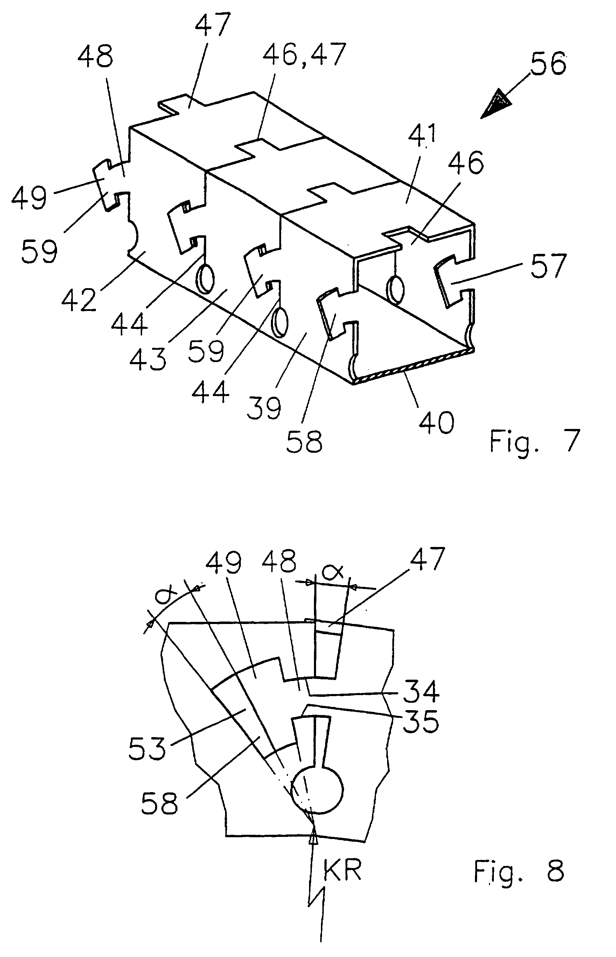

Fig. 7 zeigt ein weiteres Ausführungsbeispiel eines Strangs 56 für eine Leitungsführungsanordnung zum Führen wenigstens einer Leitung. Der Strang 56 ist in Form eines Hohlprofils ausgebildet. Er weist einen Tragwandbereich 40, einen Deckenbereich 41 und Seitenwandbereiche 38, 39 auf. Der Strang 56 ist durch Quertrennungen 44 in eine Vielzahl von relativ zueinander verschwenkbaren Segmenten 42, 43 unterteilt. Die Quertrennungen erstrecken sich durch den Deckenbereich 41 hindurch. Sie setzen sich in den Seitenbereichen 38, 39 mindestens bis in die Nähe des Tragwandbereichs 40 fort. In dem in der Fig. 7 dargestellten Ausführungsbeispiel des Strangs 56 sind Ausnehmungen 46 und Vorsprünge 47 im Deckenbereich 41 ausgebildet. Zusätzlich sind Ausnehmungen 57, 58 in den Seitenwandbereichen 38, 39 ausgebildet, in die Vorsprünge 59 hineinragen.

Die Vorsprünge 47 sind im wesentlichen laschenförmig ausgebildet. Sie ragen in im wesentlichen rechteckförmige Ausnehmungen 46 hinein.

Die in den Seitenbereichen 38, 39 ausgebildeten Ausnehmungen 57, 58 weisen jeweils eine Kopfaufnahme 53 auf. Die Kopfaufnahme ist verbunden mit einem Abschnitt 52. Sowohl die Kopfaufnahme 53 als auch der Abschnitt 52 weisen bogenförmig ausgebildete Abschnitte 34, 35 auf.

Der Vorsprung 59 weist eine bogenförmig gekrümmte Lasche 48 auf, die in den Abschnitt 52 der Ausnehmung 57 bzw. 58 hineinragt. Der Vorsprung 59 weist einen Kopf 49 am freien Ende der Lasche 48 auf.

Wie aus der Fig. 8 ersichtlich ist, ist die Kopfaufnahme 53 größer in Verschwenkrichtung der benachbarten Segmente 42, 43 des Strangs 56 betrachtet als der Kopf 49, so daß ein Verschwenken der benachbarten Segmente 42, 43 um einen Schwenkwinkel α möglich ist. Der Kopf 49 und die Ausnehmung 53 sind so ausgebildet, daß durch diese eine Begrenzung des Schwenkwinkels α erfolgt.

Während des Verschwenkvorgangs gleitet der Vorsprung 47 aus der Ausnehmung 46 heraus. Vorzugsweise ist der Vorsprung 47 in Längsrichtung des Strangs 56 so bemessen, daß dieser auch beim Erreichen eines maximalen Schwenkwinkels α noch innerhalb der Ausnehmung 46 liegt. Eine relative Verschiebung der Segmente 42, 43 quer zur Längsrichtung des Strangs 56 wird insbesondere durch den Vorsprung 47 und die Ausnehmung 46 verhindert.

Der in der Fig. 7 dargestellte Strang 56 ist, wie bereits vorstehend ausgeführt, als ein Hohlprofil ausgebildet. Der Strang 56 kann auch unmittelbar als Leitungsaufnahmekanal verwendet werden, in den Leitungen hineinverlegt werden, so daß diese geschützt geführt werden.

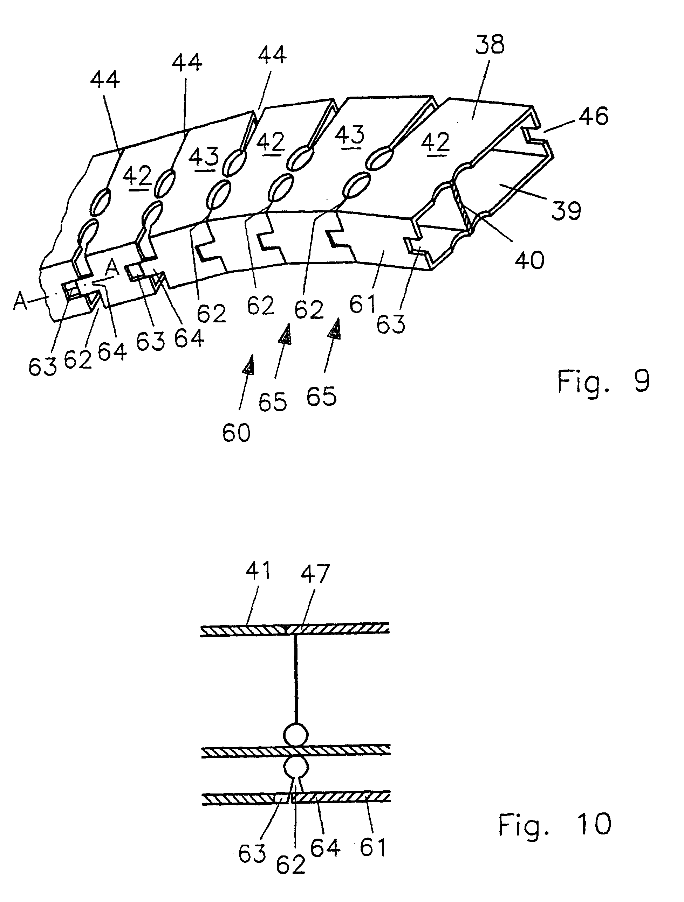

Fig. 9 zeigt schematisch und perspektivisch einen Strang 60. Der Strang 60 weist einen Tragwandbereich 40, einen Deckenbereich 41 sowie Seitenbereiche 38, 39 auf. Der Strang 60 ist durch Quertrennungen 44 in eine Vielzahl von relativ zueinander verschwenkbaren Segmenten 42, 43 unterteilt. Die Quertrennungen erstrecken sich durch den Deckenbereich 41 hindurch. Sie setzen sich in den Seitenwandbereichen 38, 39 bis in die Nähe des Tragwandbereichs 40 fort. Die Quertrennungen 44 sind so ausgebildet, daß die Segmente 42 jeweils eine Ausnehmung 46 und einen Vorsprung 47 aufweisen. Der Vorsprung 47 eines Segmentes 42 ragt in eine Ausnehmung 46 eines benachbarten Segments 43 hinein. Die Ausgestaltung der Ausnehmung 46 und des Vorsprungs 47 entspricht im wesentlichen der Ausgestaltung eines Vorsprungs und einer Ausnehmung, wie sie in der Fig. 3 dargestellt ist. Es ist nicht zwingend, daß der Vorsprung 47 im verschwenkten Zustand des Strangs 60 teilweise in die Ausnehmung 46 hineingreift.

Der Tragwandbereich 40 ist zwischen dem Deckenbereich 41 und einem Bodenbereich 61 ausgebildet. Der Strang 60 weist zusätzliche Quertrennungen 62 auf, die sich durch den Bodenbereich 61 hindurch erstrecken. Sie setzen sich in den Seitenwandbereichen 38, 39 bis in die Nähe des Tragwandbereichs 40 fort. Die zusätzlichen Quertrennungen sind V-förmig ausgebildet, so daß durch die zusätzlichen Quertrennungen 62 ein Verschwenken benachbarter Segmente 42, 43 möglich ist. Der Verschwenkwinkel ist abhängig vom Öffnungswinkel der zusätzlichen Quertrennungen 62. Die zusätzlichen Quertrennungen bilden im Bodenbereich 61 Ausnehmungen 63 und Vorsprünge 64.

Wie insbesondere aus der Fig. 9 ersichtlich ist, weist jedes Segmente 42, 43 jeweils eine Ausnehmung 63 und einen Vorsprung 64 auf. Die Längserstreckung der Ausnehmungen 63 und die Längserstreckung der Vorsprünge 62 sind so gewählt, daß sie ein Verschwenken der benachbarten Segmente 42, 43 ermöglichen. Wie aus der Fig. 9 ersichtlich ist, sind im gestreckten Zustand des Strangs 60 die Vorsprünge 64 nicht in Eingriff mit den Ausnehmungen 63. Während des Verschwenkens der benachbarten Segmente 42, 43 gelangt der Vorsprung 64 eines Segments in die Ausnehmung 63 des benachbarten Segmentes, wie dies aus der Fig. 9 ersichtlich ist.

Die Ausgestaltung der Ausnehmung 46 und des Vorsprungs 47 im Deckenbereich 41 sowie die Ausgestaltung der Ausnehmung 63 und des Vorsprungs 64 sind vorzugsweise so gewählt, daß stets entweder der Vorsprung des Deckenbereichs und/oder der Vorsprung des Bodenbereichs in die entsprechende Ausnehmung eingreift, so daß eine Bewegung der benachbarten Segmente im wesentlichen quer zur Längsrichtung des Strangs vermieden wird.

Der in der Fig. 9 dargestellte Strang 60 kann auch unmittelbar als ein Leitungsaufnahmekanal verwendet werden.

Die unterhalb des Tragwandbereichs 40 liegenden Abschnitte der Seitenbereiche 38, 39 sowie der Bodenbereich 61 bilden jeweils einen Krümmungsradiusbegrenzer 65.

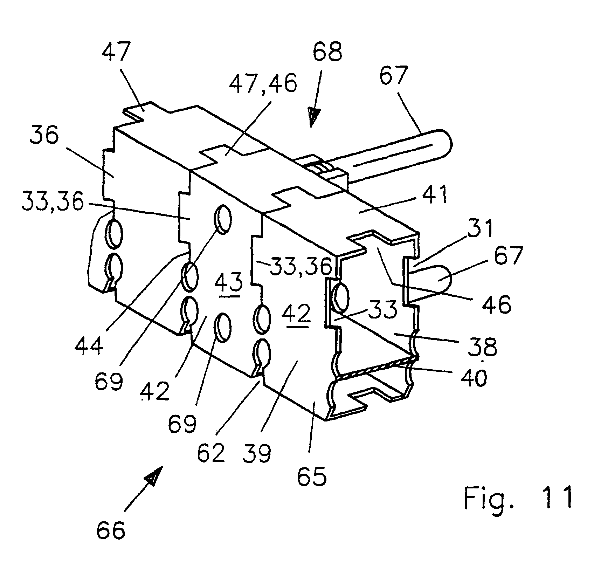

Fig. 11 zeigt ein weiteres Ausführungsbeispiel einer Leitungsführungsanordnung zum Führen wenigstens einer Leitung. Fig. 11 zeigt einen Strang 66, der mittels Stegen mit einem parallel zum Strang 66 verlaufenden zweiten Strang verbunden ist. Der zweite Strang, welcher nicht dargestellt ist, ist vorzugsweise entsprechend dem Strang 66 ausgebildet. An einem Seitenbereich 38 eines Segments 42 sind Befestigungsmittel 68 angeordnet, mittels derer die Stege 67 mit dem Strang 66 verbunden werden. In dem Seitenwandbereich 39 sind Öffnungen 69 ausgebildet, durch die Befestigungselemente zum Anbringen der Befestigungsmittel 68 hindurchtreten können.

Der Strang 66 weist einen Tragwandbereich 40, einen Deckenbereich 41 und Seitenwandbereiche 38, 39 auf. Der Strang 66 ist durch Quertrennungen 44 in eine Vielzahl von Segmenten 42, 43 unterteilt. Die Segmente 42, 43 sind relativ zueinander verschwenkbar. Die Quertrennungen 44 erstrecken sich durch den Deckenbereich 41 hindurch. Sie setzen sich in den Seitenbereichen 38, 39 bis in die Nähe des Tragwandbereichs 40 fort. In dem Deckenbereich 41 sind Vorsprünge 47 und Ausnehmungen 46 ausgebildet. Die Ausnehmungen 46 und die Vorsprünge 47 sind komplementär zueinander ausgebildet. Jedes Segment 42, 43 weist jeweils einen Vorsprung 47 und eine Ausnehmung 46 auf. In die Ausnehmung 46 eines Segmentes 43 ragt ein Vorsprung 47 eines Segmentes 42 hinein.

Auch in den Seitenwandbereichen 38, 39 sind Ausnehmungen 33 und Vorsprünge 36 ausgebildet. Die Ausnehmungen 33 und die Vorsprünge 36 sind komplementär zueinander ausgebildet. Sie weisen bogenförmig gekrümmte Abschnitte auf.

Unterhalb des Tragwandbereichs 40 sind Krümmungsradiusbegrenzer 65 ausgebildet. Die Ausbildung der Krümmungsradiusbegrenzer 65 entspricht der Ausbildung der in den Figuren 9 und 10 dargestellten Krümmungsradiusbegrenzer 65.

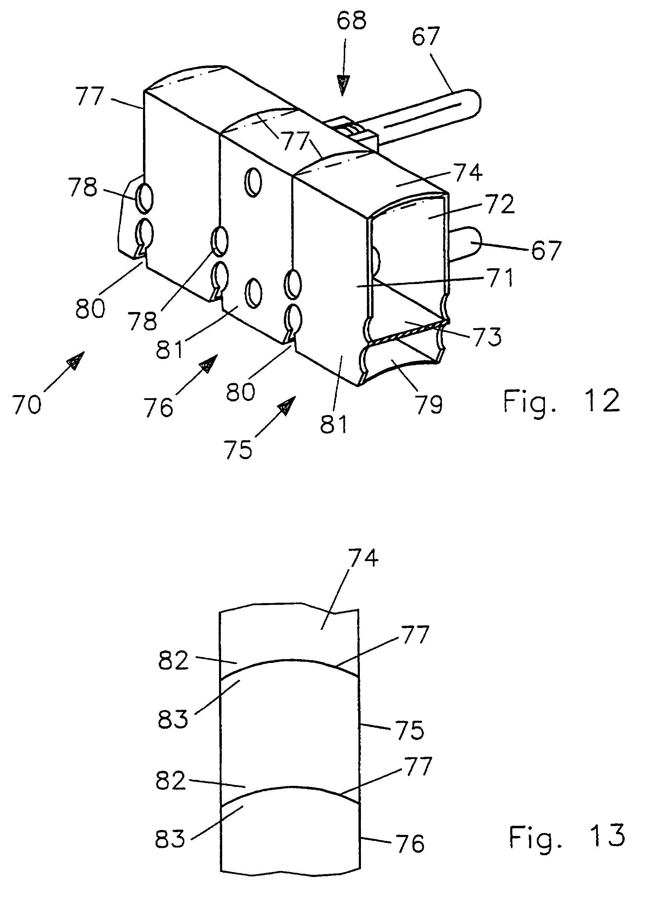

Die Figuren 12, 13 zeigen die Ausbildung eines Strangs 70 für eine Leitungsführungsanordnung zum Führen wenigstens einer Leitung. Der Strang 70 weist einen Trangwandbereich 73, einen Deckenbereich 74 und Seitenwandbereiche 71, 72 auf Der Strang 70 ist durch Quertrennungen 77 in eine Vielzahl von Segmenten 75, 76 unterteilt. Die Segmente 75, 76 sind in Längsrichtung des Strangs 70 verschwenkbar. Die Quertrennungen 77 erstrecken sich durch den Deckenbereich 74 hindurch. Die Quertrennungen 77 setzen sich in den Seitenwandbereichen 71, 72 bis in die Nähe des Tragwandbereichs 73 fort. Die Quertrennungen 77 münden in Öffnungen 78, durch die eine Biegebeanspruchung des Strangs im Bereich der quer zur Längsachse des Strangs verlaufenden Biegeachsen vermindert wird.

Die Seitenwandbereiche 71, 72 setzen sich unterhalb des Tragwandbereichs 73 fort. Im wesentlichen parallel zum Tragwandbereich 73 ist ein Bodenbereich 79 vorgesehen, der mit den sich unterhalb des Tragwandbereichs 73 fortsetzenden Bereichen der Seitenwandbereiche 71, 72 verbunden ist.

Der Strang 70 weist zusätzliche Quertrennungen 80 auf, die sich durch den Bodenbereich 79 hindurch erstrecken. Diese zusätzlichen Quertrennungen 80 setzen sich in den Seitenwandbereichen 71, 72 bis in die Nähe des Tragwandbereichs 73 fort. Wie aus der Fig. 12 ersichtlich ist, sind die zusätzlichen Quertrennungen 80 im wesentlichen V-förmig ausgebildet. Die zusätzlichen Quertrennungen 80 fluchten im wesentlichen mit den Quertrennungen 77. Die unterhalb des Tragwandbereichs 73 liegenden Abschnitte der Seitenwandbereiche 71, 72 sowie der Bodenbereich 79 eines jeden Segmentes 75, 76 bilden jeweils einen Krümmungsradiusbegrenzer 81.

Aus den Figuren 12 und 13 ist ersichtlich, daß die Quertrennungen 77 im wesentlichen bogenförmig ausgebildet sind. Die Quertrennungen 77 bilden in dem Segment 75 eine Ausnehmung 82, in die ein korrespondierend ausgebildeter Vorsprung 83 des Segmentes 76 hineinragt.

Es ist nicht zwingend, daß die Quertrennung über die gesamte Breite des Strangs 70 bogenförmig ausgebildet ist. Die Quertrennung kann auch beispielsweise Ω-förmig ausgebildet sein.

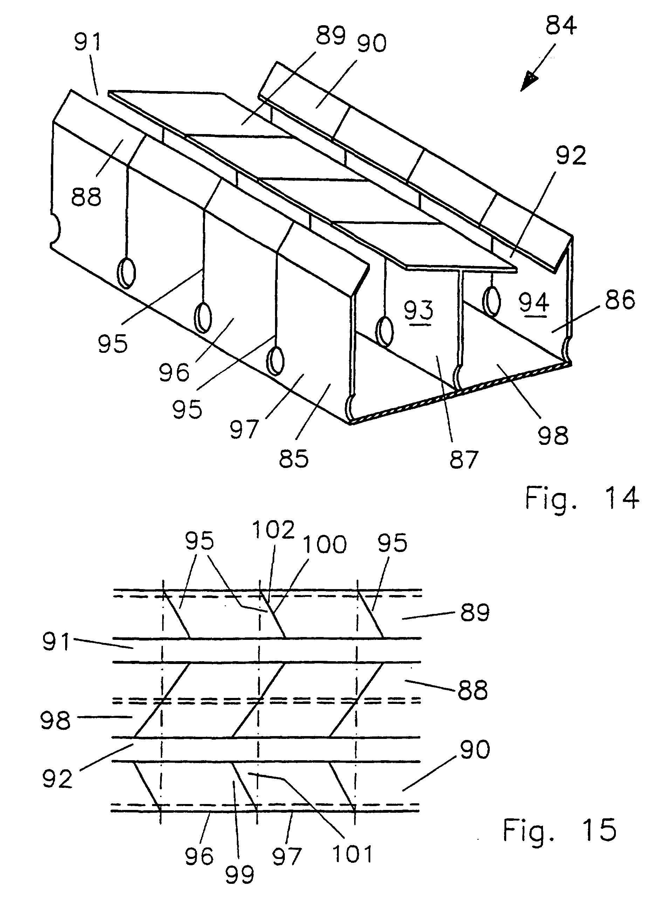

Figuren 14 und 15 zeigen ein weiteres Ausführungsbeispiel einer Leitungsführungsanordnung. Der prinzipielle Aufbau der Leitungsführungsanordnung entspricht dem Aufbau einer Leitungsführungsanordnung, wie sie in der Fig. 4 dargestellt ist. Die Leitungsführungsanordnung weist einen Leitungsaufnahmekanal 84 auf Der Leitungsaufnahmekanal 84 weist Seitenwandbereiche 85, 86 auf. Zwischen den Seitenwandbereichen 85, 86 ist eine Trennwand 87 vorgesehen, die sich im wesentlichen in Längsrichtung des Leitungsaufnahmekanals 84 und parallel zu den Seitenwandbereichen 85, 86 erstreckt. Der Leitungsaufnahmekanal 84 weist Deckenbereiche 88, 89 und 90 auf. Zwischen den benachbarten Deckenbereichen 88, 89; 89, 90 sind Spalte 91, 92 vorgesehen, durch die eine Leitung in einen durch den Seitenwandbereich 85 und die Trennwand 87 begrenzenden Kanal 93 bzw. in einen Kanal 94, der durch die Trennwand 87 und den Seitenwandbereich 86 begrenzt ist, eingebracht werden kann.

Der Leitungsaufnahmekanal 84 ist durch Quertrennungen 95 in eine Vielzahl von relativ zueinander verschwenkbaren Segmenten 96, 97 unterteilt. Insbesondere sind die Quertrennungen in Längsrichtung des Leitungsaufnahmekanals äquidistant zueinander ausgebildet, so daß alle Segmente 96, 97 die gleiche Erstreckung in Längsrichtung des Leitungsaufnahmekanals 84 aufweisen.

Die Quertrennungen 95 erstrecken sich durch die Deckenbereiche 88, 89, 90 hindurch. Sie setzen sich in die Seitenwandbereiche 85, 86 und die Trennwand 87 mindestens bis in die Nähe eines Tragwandbereichs 98 fort.

Wie insbesondere aus der Fig. 15 ersichtlich ist, sind die Quertrennungen 95, quer zur Längsrichtung des Leitungsaufnahmekanals 84 betrachtet, zickzackförmig ausgebildet. Die zwischen zwei benachbarten Segmenten 96, 97 ausgebildete Quertrennung 95 bildet in dem Segment 96 eine Ausnehmung 99 und in dem Segment 97 eine Ausnehmung 100. In die Ausnehmung 99 bzw. 100 greift ein entsprechender Vorsprung 101, 102 ein. Der Vorsprung 101 bzw. 102 ist am der Ausnehmung gegenüberliegenden Segment ausgebildet.

### Bezugszeichenliste

- 1: Leitungsaufnahmekanal
- 2: Tragwandbereich
- 3: Deckenbereich
- 4, 5: Seitenwandbereich
- 6: Quertrennungen
- 7: Öffnung
- 8: Kanal
- 9, 10: Segment
- 11: Ausnehmung
- 12: Vorsprung
- 13: Leitungsaufnahmekanal
- 14: Trennwand
- 15: Kanal
- 16: Kanal
- 17, 18: Fläche
- 19: Leitungsaufnahmekanal
- 20, 21, 22: Deckenbereich
- 23, 24: Spalt
- 25, 26, 27: Ausnehmung
- 28, 29, 30: Vorsprung
- 31, 32, 33: Ausnehmung
- 34, 35: Abschnitt
- 36: Vorsprung
- 37: Strang
- 38, 39: Seitenwandbereich
- 40: Tragwandbereich
- 41: Deckenbereich
- 42, 43: Segment
- 44: Quertrennung
- 45: Öffnung
- 46: Ausnehmung
- 47: Vorsprung
- 48: Lasche
- 49: Kopf
- 50, 51: Anschlagfläche
- 52: Abschnitt
- 53: Kopfaufnahme
- 54, 55: Anschlagfläche
- 56: Strang
- 57, 58: Ausnehmung
- 59: Vorsprung
- 60: Strang
- 61: Bodenbereich
- 62: zusätzliche Quertrennung
- 63: Ausnehmung
- 64: Vorsprung
- 65: Krümmungsradiusbegrenzer
- 66: Strang
- 67: Steg
- 68: Befestigungsmittel
- 69: Öffnung
- 70: Strang
- 71, 72: Seitenwandbereich
- 73: Tragwandbereich
- 74: Deckenbereich
- 75, 76: Segment
- 77: Quertrennung
- 78: Öffnung
- 79: Bodenbereich
- 80: zusätzliche Quertrennung
- 81: Krümmungsradiusbegrenzer
- 82: Ausnehmung
- 83: Vorsprung
- 84: Leitungsaufnahmekanal
- 85, 86: Seitenwandbereich
- 87: Trennwand
- 88, 89, 90: Deckenbereich
- 91, 92: Spalt
- 93: Kanal
- 94: Kanal
- 95: Quertrennungen
- 96, 97: Segment
- 98: Tragwandbereich
- 99, 100: Ausnehmung
- 101, 102: Vorsprung

- α: Verschwenkwinkel
- ΔS: Strecke
- U: Überstand

## Patentansprüche

1. Leitungsführungsanordnung zum Führen wenigstens einer Leitung mit einem einen Tragwandbereich (2, 98), einen Deckenbereich (3, 20, 21, 22, 8, 89, 90) und Seitenwandbereiche (4, 5, 85, 86) aufweisenden Leitungsaufnahmekanal (1, 13, 19, 84), der durch Quertrennungen (6, 95) in eine Vielzahl von relativ zueinander verschwenkbaren Segmenten (9, 10, 96, 97) unterteilt ist, wobei die Quertrennungen (6, 95) sich durch den Dekenbereich (3, 20, 21, 22, 88, 89, 90) hindurch erstrecken und sich in die Seitenwandbereiche (4, 5, 85, 86) bis in die Nähe des Tragwandbereichs (2, 98) fortsetzen, **dadurch gekennzeichnet, daß** wenigstens eine Quertrennung (6, 98) zweier benachbarter Segmente (9, 10, 96, 97) so ausgebildet ist, daß das eine Segment (9, 10, 96, 97) wenigstens eine Ausnehmung (11, 25, 26, 27, 31, 32, 33, 99, 100) und das andere Segment (9, 10, 96, 97) einen in die Ausnehmung (11, 25, 26, 27, 31, 32, 33, 99, 100) eingreifenden Vorsprung (12, 28, 29, 30, 36, 101, 102) aufweist.

2. Leitungsführungsanordnung zum Führen wenigstens einer Leitung mit zwei im wesentlichen parallelen miteinander verbundenen Strängen (37, 56, 60, 66), wobei jeder Strang (37, 56, 60, 66) einen Tragwandbereich (40), einen Deckenbereich (41) und wenigstens einen Seitenwandbereich (38, 39) aufweist und durch Quertrennungen (44) in eine Vielzahl von relativ zueinander verschwenkbaren Segmenten (42, 43) unterteilt ist, wobei die Quertrennungen (44) sich durch den Dekenbereich (41) hindurch erstrecken und sich in den wenigstens einen Seitenwandbereich (38, 39) bis in die Nähe des Tragwandbereichs (40) fortsetzen, wobei wenigstens eine Quertrennung (44) zweier benachbarter Segmente (42, 43) so ausgebildet ist, daß das eine Segmente (42, 43) wenigstens eine Ausnehmung (46, 57, 58, 63) und das andere Segment (43) einen in die Ausnehmung (46, 57, 58, 63) eingreifenden Vorsprung (49, 59, 63) aufweist.

3. Leitungsführungsanordnung nach Anspruch 1 oder 2, **dadurch gekennzeichnet, daß** die Ausnehmung (31, 32, 33, 57, 58) und der Vorsprung (36, 59) in Seitenwandbereichen (4, 5, 38, 39) ausgebildet sind.

4. Leitungsführungsanordnung nach Anspruch 3, **dadurch gekennzeichnet, daß** die Ausnehmung (36, 58) wenigstens einen sich in Längsrichtung der Leitungsführungsanordnung erstreckenden, bogenförmig gekrümmten Abschnitt (34, 35) aufweist.

5. Leitungsführungsanordnung nach einem der Ansprüche 1 bis 4, **dadurch gekennzeichnet, daß** die Ausnehmung (11, 25, 26, 27, 31, 32, 46, 63) und der Vorsprung (12, 28, 29, 30, 47, 64) in Deckenbereichen (3, 41) ausgebildet sind.

6. Leitungsführungsanordnung nach einem der Ansprüche 1 bis 5, **dadurch gekennzeichnet, daß** der Tragwandbereich (40) zwischen dem Dekenbereich (41) und einem Bodenbereich (61) ausgebildet ist, daß sich zusätzliche Quertrennungen (62) durch den Bodenbereich (61) hindurch erstreken und sich in den wenigstens einen Seitenwandbereich (38, 39) bis in die Nähe des Tragwandbereichs (41) fortsetzen, wobei wenigstens eine zusätzliche Quertrennung (62) zweier benachbarter Segmente (42, 43) so ausgebildet ist, daß das eine Segmente (42, 43) wenigstens eine Ausnehmung (63) und das andere Segment (42, 43) einen in die Ausnehmung (63) eingreifenden Vorsprung (64) aufweist.

7. Leitungsführungsanordnung nach einem der Ansprüche 1 bis 6, **dadurch gekennzeichnet, daß** die Ausnehmung und der Vorsprung im wesentlichen komplementär zueinander ausgebildet sind.

8. Leitungsführungsanordnung nach einem der Ansprüche 1 bis 6, **dadurch gekennzeichnet, daß** die Ausnehmung und der Vorsprung jeweils wenigstens eine Anschlagfläche (50, 51) aufweisen, durch die ein Verschwenkwinkel (α) der benachbarten Segmente (42, 43) begrenzt wird.

9. Leitungsführungsanordnung nach einem der Ansprüche 1 bis 8, **dadurch gekennzeichnet, daß** der Vorsprung (59) eine Lasche (48) mit einem den Laschenquerschnitt seitlich überragenden Kopf (49) aufweist, und daß die Ausnehmung (57, 58) einen Abschnitt (52), in dem die Lasche (48) beweglich ist, und eine Kopfaufnahme (53), in der der Kopf (49) beweglich ist, aufweist, wobei die Längserstreckung der Kopfaufnahme (53) größer ist als die Längserstreckung des Kopfes (49).

10. Leitungsführungsanordnung nach Anspruch 8 oder 9, **dadurch gekennzeichnet, daß** die Längserstreckung der Ausnehmung (46, 57, 58) größer ist als die Längserstreckung des Vorsprungs (47, 59).

11. Leitungsführungsanordnung nach Anspruch 8, 9 oder 10, **dadurch gekennzeichnet, daß** die Ausnehmung (46, 57, 58) und der Vorsprung (47, 59) im wesentlichen T-formig ausgebildet sind.

## Claims

1. A line guiding arrangement for guiding at least one line, comprising a line receiving channel (1, 13, 19, 84) which has a support wall portion (2, 98), a cover portion (3, 20, 21, 22, 88, 89, 90) and side wall portions (4, 5, 85, 86) which receiving channel (1, 13, 19, 84) is subdivided by transverse separations (6, 95) into a multiplicity of segments (9, 10, 96, 97) which are pivotable relative to one another, wherein the transverse separations (6, 95) extend through the cover portion (3, 20, 21, 22, 88, 89, 90) and continue into the side wall portions (4, 5, 85, 86) to the vicinity of the support wall portion (2, 98), **characterized in that** at least one transverse separation (6, 98) of two adjacent segments (9, 10, 96, 97) is configured so that the one segment (9, 10, 96, 97) comprises at least one recess (11, 25, 26, 27, 31, 32, 33, 99, 100) and the other segment (9, 10, 96, 97) comprises at least one projection (12, 28, 29, 30, 36, 101, 102) engaging with the recess (11, 25, 26, 27, 31, 32, 33, 99, 100).

2. Line guiding arrangement for guiding at least one line, comprising two substantially parallel strands (37, 56, 60, 66) connected to each other, wherein each strand (37, 56, 60, 66) has a support wall portion (40), a cover portion (41) and at least one side wall portion (38, 39) and is subdivided by transverse separations (44) into a multiplicity of segments (42, 43) which are pivotable relative to one another, wherein the transverse separations (44) extend through the cover portion (41) and continue into the at least one side wall portion (38, 39) to the vicinity of the support wall portion (40), and wherein at least one transverse separation (44) of two adjacent segments (42, 43) is configured so that the one segment (42, 43) comprises at least one recess (46, 57, 58, 63) and the other segment (43) comprises a projection (49, 59, 63) engaging with the recess (46, 57, 58, 63).

3. Line guiding arrangement according to claim 1 or 2, **characterized in that** the recess (31, 32, 33, 57, 58) and the projection (36, 59) are formed in side wall portions (4, 5, 38, 39).

4. Line guiding arrangement according to claim 3, **characterized in that** the recess (36, 58) has at least one section (34, 35) extending in the longitudinal direction of the line guiding arrangement and being arc like curved.

5. Line guiding arrangement according to one of claims 1 to 4, **characterized in that** the recess (11, 25, 26, 27, 31, 32, 46, 63) and the projection (12, 28, 29, 30, 47, 64) are formed in cover portions (3, 41).

6. Line guiding arrangement according to one of claims 1 to 5, **characterized in that** the support wall portion (40) is formed between the cover portion (41) and a bottom portion (61), **in that** additional transverse separations (62) extend through the bottom portion (61) and continue into the at least one side wall portion (38, 39) to the vicinity of the support wall portion (41), wherein at least one additional transverse separation (62) of two adjacent segments (42, 43) is formed so that the one segment (42, 43) has at least one recess (63) and the other segment (42, 43) has a projection (64) engaging with the recess (63).

7. Line guiding arrangement according to one of claims 1 to 6, **characterized in that** the recess and the projection are substantially formed complementary to each other.

8. Line guiding arrangement according to one of claims 1 to 6, **characterized in that** the recess and the projection respectively have at least one abutment surface (50, 51) by which a pivot angle (α) of the adjacent segments (42, 43) is limited.

9. Line guiding arrangement according to one of claims 1 to 8, **characterized in that** the projection (59) has a tab (48) with a head (49) that laterally extends beyond the tab cross section and that the recess (57, 58) has a section (52) in which the tab (48) is movable and a head reception (53) in which the head (49) is movable, wherein the longitudinal extension of the head reception (53) is greater than the longitudinal extension of the head (49).

10. Line guiding arrangement according to claim 8 or 9, **characterized in that** the longitudinal extension of the recess (46, 57, 58) is greater than the longitudinal extension of the projection (47, 59).

11. Line guiding arrangement according to claim 8, 9 or 10, **characterized in that** the recess (46, 57, 58) and the projection (47, 59) are substantially T-shaped.

## Revendications

1. Système de guidage de lignes destiné au guidage d'au moins une ligne avec un canal récepteur de lignes (1, 13, 19, 84) comportant une zone de paroi de support (2, 98), une zone de couvercle (3, 20, 21, 22, 88, 89, 90) et des zones de parois latérales (4, 5, 85, 86), ledit canal récepteur de lignes (1, 13, 19, 84) étant subdivisé par des séparations transversales (6, 95) en une multiplicité de segments (9, 10, 96, 97) qui sont pivotables l'un par rapport à l'autre, dans quel cas les séparations transversales (6, 95) s'étendent à travers la zone de couvercle (3, 20, 21, 22, 88, 89, 90) et continuent dans les zones de paroi latérales (4, 5, 85, 86) jusqu'à proximité de la zone de paroi de support (2, 98), **caractérisé en ce qu'**au moins une séparation transversale (6, 98) de deux segments (9, 10, 96, 97) adjacents est réalisée de telle façon qu'un segment (9, 10, 96, 97) a au moins un dégagement (11, 25, 26, 27, 31, 32, 33, 99, 100) et l'autre segment (9, 10, 96, 97) a une saillie (12, 28, 29, 30, 36, 101, 102) s'engageant dans le dégagement (11, 25, 26, 27, 31, 32, 33, 99, 100).

2. Système de guidage de lignes destiné au guidage d'au moins une ligne avec deux brins (37, 56, 60, 66) sensiblement parallèles et liés l'un à l'autre, dans quel cas chaque brin (37, 56, 60, 66) présente une zone de paroi de support (40), une zone de couvercle (41) et au moins une zone de paroi latérale (38, 39) et étant subdivisé par des séparations transversales (44) en une multiplicité de segments (42, 43) étant pivotables l'un par rapport à l'autre, les séparations transversales (44) s'étendant à travers la zone de couvercle (41) et continuant à s'étendre dans l'au moins une zone de paroi latérale (38, 39) jusqu'à proximité de la zone de paroi de support (40), au moins une séparation transversale (44) de deux segments adjacents (42,43) étant réalisée de telle façon que l'un des segments (42, 43) a au moins un dégagement (46, 57, 58, 63) et l'autre segment (43) a une saillie (49, 59, 63) s'engageant dans le dégagement (46, 57, 58, 63).

3. Système de guidage de lignes selon la revendication 1 ou 2, **caractérisé en ce que** le dégagement (31, 32, 33, 57, 58) et la saillie (36, 59) sont réalisés dans des zones de parois latérales (4, 5, 38, 39).

4. Système de guidage de lignes selon la revendication 3, **caractérisé en ce que** le dégagement (36, 58) présente au moins une section (34, 35) s'étendant en direction longitudinale du système de guidage de lignes et étant courbée en forme d'arc.

5. Système de guidage de lignes selon l'une des revendications 1 à 4, **caractérisé en ce que** le dégagement (11, 25, 26, 27, 31, 32, 46, 63) et la saillie (12, 28, 29, 30, 47, 64) sont réalisés dans des zones de couvercle (3, 41).

6. Système de guidage de lignes selon l'une des revendications 1 à 5, **caractérisé en ce que** la zone de paroi de support (40) est formée entre la zone de couvercle (41) et une zone de fond (61), **en ce que** des séparations transversales supplémentaires (62) s'étendent à travers la zone de fond (61) et continuent dans l'au moins une zone de paroi latérale (38, 39) jusqu'à proximité de la zone de paroi de support (41), au moins une séparation transversale supplémentaire (62) de deux segments adjacents (42, 43) étant réalisée de telle façon que l'un des segments (42, 43) a au moins un dégagement (63) et l'autre segment (42, 43) a une saillie (64) s'engageant dans le dégagement (63).

7. Système de guidage de lignes selon l'une des revendications 1 à 6, **caractérisé en ce que** le dégagement et la saillie sont réalisés sensiblement de manière à être complémentaires l'un par rapport à l'autre.

8. Système de guidage de lignes selon l'une des revendications 1 à 6, **caractérisé en ce que** le dégagement et la saillie présentent respectivement au moins une surface de butée (50, 51) par laquelle un angle de pivotement (α) des segments adjacents (42, 43) est limité.

9. Système de guidage de lignes selon l'une des revendications 1 à 8, **caractérisé en ce que** la saillie (59) présente une éclisse (48) avec une tête (49) dépassant latéralement la section d'éclisse et **en ce que** le dégagement (57, 58) a une section (52) dans laquelle l'éclisse (48) est mobile et un logement de tête (53) dans lequel la tête (49) est mobile, l'étendue longitudinale du logement de tête (53) étant plus grand que l'étendue longitudinale de la tête (49).

10. Système de guidage de lignes selon la revendication 8 ou 9, **caractérisé en ce que** l'étendue longitudinale du dégagement (46, 57, 58) est plus grande que l'étendue longitudinale de la saillie (47, 59)

11. Système de guidage de lignes selon la revendication 8, 9 ou 10, **caractérisé en ce que** le dégagement (46, 57, 58) et la saillie (47, 59) sont réalisés sensiblement en forme de T.
